# DEMANDE DE BREVET EUROPEEN

(11) **EP 1 933 155 A1**
(43) Date de publication de la demande: **18.06.2008**
(21) Numéro de dépôt: 07120889.6
(22) Date de dépôt: 16.11.2007
(51) Int. Cl.: G01P 3/44

(54) **Dispositif de palier à roulement équipé d'un capteur de vitesse.**

(30) Priorité: 15.12.2006 FR 0655556
(71) Demandeur: Aktiebolaget SKF, 415 50 Göteborg (SE)
(72) Inventeur: Debrailly, Franck, 37380, NOUZILLY (FR); Sausset, Vincent, 37100, TOURS (FR); Abgrall, Loïc, 37200, TOURS (FR)
(74) Mandataire: Casalonga, Axel

(57) **Abrégé**

Dispositif de palier à roulement instrumenté 27 pour mesurer les paramètres de rotation du palier, comprenant une bague tournante 29, une bague non tournante 28, au moins une rangée d'éléments roulants 30 disposés entre les bagues non tournante et tournante, un codeur 34 tournant et une carte électronique 1 non tournante pliable comportant au moins un capteur 11 et au moins une zone pliée 3 plane supportant ledit capteur 11 et venant en appui sur une surface de référence rigide 14a faisant partie d'un bloc capteur, au moins un capteur 11 se présentant sous la forme d'une cellule de détection ponctuelle.

## Description

La présente invention concerne le domaine des paliers à roulement instrumentés munis d'un dispositif de détection des paramètres de rotation du roulement tels que la position angulaire, la vitesse angulaire, ou l'accélération angulaire de la partie tournante.

De tels roulements utilisent généralement un anneau codeur fixé sur la partie tournante, par exemple un anneau multipolaire et un ou plusieurs capteurs disposés axialement ou radialement en regard de la partie active de l'anneau codeur, par exemple des cellules à effet Hall. Les capteurs sont fixés à une carte rigide de circuit imprimé généralement perpendiculaire à l'axe de rotation du roulement. Dans le cas où l'on souhaite un encombrement axial minimum du roulement tout en obtenant un signal de sortie stable et répétitif, on peut exploiter la grande rigidité radiale du roulement et prévoir un entrefer radial entre le codeur et le capteur, voir document FR-A-2 882 139.

Dans ce cas, certains points techniques s'avèrent difficiles. Le capteur doit être positionné radialement avec une grande précision par rapport au codeur, ce qui est difficile et suppose que le capteur ait son appui sur une surface de référence elle-même positionnée avec précision par rapport au codeur. I1 est souvent nécessaire de recourir à un résinage du capteur sur son support pour le maintenir dans la position adéquate, ce qui est une opération coûteuse. Par ailleurs, les pattes de connexion du capteur sont disposées perpendiculairement à la carte de circuit imprimé rigide et traversent la carte par des petits trous pour déboucher sur l'autre face où les pattes sont soudées au circuit, la partie dépassante des pattes étant ensuite coupée. Là encore, ces opérations s'avèrent coûteuses.

Le document FR 2 655 735 décrit un capteur comprenant un conducteur formé en méandres sur un circuit imprimé, collé sur un stator. Le conducteur est constitué par un brin pris en sandwich entre deux films isolants. Ce type de capteur de type inductif ne fournit pas un signal suffisamment puissant et précis pour convenir à toutes les applications industrielles.

La présente invention vise à remédier aux inconvénients évoqués ci-dessus.

La présente invention propose un dispositif capteur de vitesse fournissant un signal précis et stable dans le temps dans un encombrement axial très faible, et ce pour un coût raisonnable.

Selon un aspect de l'invention, un dispositif de palier à roulement instrumenté pour mesurer les paramètres de rotation du palier comprend une bague tournante, une bague non tournante, au moins une rangée d'éléments roulants disposés entre les bagues non tournante et tournante, un codeur tournant et une carte électronique non tournante supportant au moins un capteur. La carte électronique est pliable et comprend au moins une zone pliée plane supportant ledit capteur et venant en appui sur une surface de référence rigide faisant partie d'un bloc capteur, au moins un capteur se présentant sous la forme d'une cellule de détection ponctuelle.

Le fait que la carte électronique soit pliable permet d'ajuster avec précision la zone de la carte supportant le capteur sur la surface de référence, d'où un positionnement précis du capteur. En outre, la disposition du capteur sur la portion plane de la carte permet d'obtenir un positionnement précis et sûr. On obtient ainsi un capteur fournissant un signal précis et stable dans le temps.

On entend ici par « cellule de détection ponctuelle », une cellule occupant un secteur angulaire limité. En d'autres termes la cellule s'étend angulairement de façon limitée dans le sens circonférentiel autour de l'axe de rotation du palier à roulement. Le capteur comporte donc deux extrémités distinctes séparées par une certaine distance dans le sens circonférentiel.

La carte électronique est mise en forme de façon à obtenir localement une portion plane formant un angle avec la portion adjacente de la carte et sur laquelle est montée au moins un capteur.

Dans un mode de réalisation, la carte électronique comporte également des composants électroniques de traitement du signal émis par le ou les capteurs. Les composants électroniques et le ou les capteurs peuvent être disposés sur une même face de la carte électronique. Alternativement, les composants électroniques d'une part, et le ou les capteurs d'autre part, sont disposés sur des faces opposées de la carte électronique.

Dans un mode de réalisation, la carte électronique comprend également un connecteur disposé sur une même face que le ou les capteurs ou sur la face opposée.

Dans un mode de réalisation, la zone supportant le capteur est fixée à la surface de référence par collage.

Dans un mode de réalisation, la zone supportant le capteur est fixée à la surface de référence par retenue mécanique. La zone pliable supportant le capteur peut être fixée à la surface de référence par une agrafe. L'agrafe peut se présenter sous la forme d'une pièce de tôle recourbée en forme de C ou en forme d'Ω.

Dans un mode de réalisation, le dispositif comprend un bloc capteur fixé à la bague non tournante et supportant la carte électronique. Le bloc capteur peut comprend un capot et un support intermédiaire muni d'au moins une surface de référence pour le ou les capteurs. Le capot peut être muni d'au moins un élément de positionnement et de retenue du support intermédiaire et de la carte électronique.

Le bloc capteur peut être muni d'au moins une surface de référence pour le ou le capteurs et d'au moins un élément de positionnement et de retenue de la carte électronique.

Dans un mode de réalisation, la carte électronique se présente après mise en place dans le bloc capteur sous la forme d'un anneau radial muni d'au moins une patte axiale formant une zone de support du capteur. Alternativement, la carte électronique peut se présenter après mise en place dans le bloc capteur sous la forme d'un anneau axial ouvert ou à extrémités jointives. On entend par « anneau axial », un anneau présentant une dimension axiale supérieure à sa dimension radiale. La dimension radiale peut correspondre à l'épaisseur de la carte électronique et la dimension axiale à sa largeur. La carte électronique peut comprendre des portions coudées et des portions droites, les portions droites étant munies de renforts. Les renforts peuvent former des surépaisseurs. Le dispositif peut comprendre au moins deux rangées de capteurs disposés dans des plan radiaux distincts. On peut ainsi affecter une rangée de capteurs à un premier codeur et l'autre rangée de capteurs à un deuxième codeur en vue de réaliser deux détections distinctes, par exemple sur deux paliers à roulement.

Le procédé de fabrication d'un dispositif de palier à roulement instrumenté pour mesurer le paramètres de rotation, comprend une bague tournante, une bague non tournante, une rangée d'éléments roulants disposés entre les bagues tournante et non tournant, un codeur tournant et une carte électronique comprenant au moins un capteur. On fixe ledit au moins un capteur sur la carte électronique, on met en forme par pliage la carte électronique et on monte ladite carte électronique dans un bloc capteur, une zone pliée plane de la carte électronique supportant un capteur venant en appui sur une surface de référence rigide du bloc capteur. Le capteur peut être fixé à la carte électronique par soudure.

Dans un mode de réalisation, la carte électronique est fixée au bloc capteur par repoussage de matière d'une partie du bloc capteur.

Dans un mode de réalisation, le dit au moins un capteur est fixé sur une seule face de la carte électronique.

Dans un mode de réalisation, la zone de la carte électronique supportant le capteur est collée à la surface de référence.

Dans un autre mode de réalisation, la zone de la carte électronique supportant le capteur est agrafée à la surface de référence.

Grâce à l'invention, le capteur est capable de fournir un signal précis, fiable et stable dans le temps et ce moyennant un encombrement axial réduit et un faible coût.

La présente invention sera mieux comprise à la lecture de la description détaillée d'un mode de réalisation particulier, pris à titre d'exemple nullement limitatif et illustré par les dessins annexés, sur lesquels :
- la figure 1 est une vue de face en élévation d'une carte électronique selon un aspect de l'invention ;
- la figure 2 est une vue de côté en élévation de la carte électronique de la figure 1 ;
- la figure 3 est une vue arrière en élévation de la carte électronique de la figure 1 ;
- la figure 4 est une vue éclatée en perspective d'un bloc capteur muni d'une carte électronique ;
- la figure 5 est une vue en perspective à l'état monté du bloc capteur de la figure 4 ;
- la figure 6 est une vue en coupe axiale d'un palier à roulement équipé du bloc capteur de la figure 5 ;
- les figures 7 à 11 sont des vues correspondant respectivement aux figures 1 à 5 d'une carte électronique et d'un bloc capteur selon un autre mode de réalisation ;
- les figures 12 et 13 sont des vues correspondant respectivement aux figures 4 et 5 d'un bloc capteur selon un autre mode de réalisation ;
- la figure 14 est une vue en perspective de l'agrafe du bloc capteur des figures 12 et 13 ;
- la figure 15 est une vue de face à plat d'une carte électronique selon un autre mode de réalisation ;
- la figure 16 est une vue de côté en élévation de la carte électronique de la figure 15 ;
- la figure 17 est une vue en perspective de la carte électronique de la figure 15 mise en forme ;
- la figure 18 est une vue en perspective d'un bloc capteur muni de la carte électronique de la figure 17 ;
- la figure 19 est une vue en coupe axiale d'un palier à roulement équipé du bloc capteur de la figure 18 ; et
- les figures 20 à 24 sont des vues correspondant respectivement aux figures 15 à 19 selon un autre mode de réalisation.

De façon générale dans ce qui suit, les références des éléments semblables ont été conservées d'une figure à l'autre.

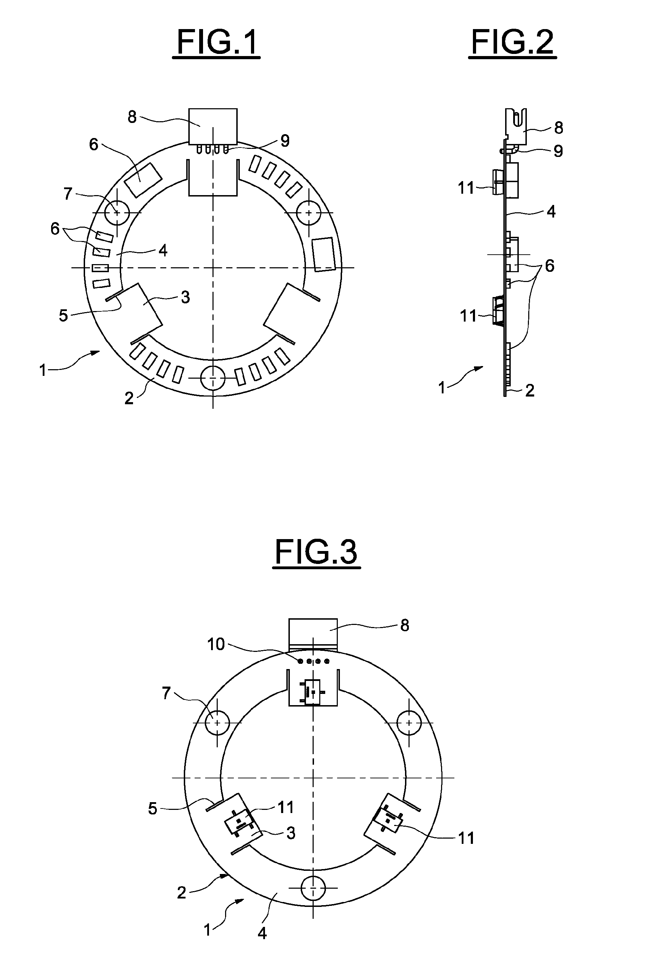

Comme illustré sur les figures 1 à 3, la carte électronique 1 comprend un circuit imprimé 2 de type souple et pliable, par exemple comprenant un substrat à base de polyamide et une ou plusieurs couches conductrices. Le circuit imprimé 2 présente la forme générale d'un disque annulaire muni de trois oreilles 3 s'étendant radialement vers l'intérieur du disque, des découpes 4 étant ménagées entre deux côtés d'une oreille 3 et le reste du disque annulaire de telle sorte que l'oreille 3 de forme rectangulaire est reliée seulement par un côté au disque annulaire 4, notamment le côté opposé au centre du disque annulaire 4. Les découpes 5 sont de préférence parallèles l'une à l'autre pour chaque oreille 3.

Le circuit imprimé 2 supporte des composants électroniques 6 disposés sur le disque annulaire 4, par exemple par montage automatisé avec fixation en surface. Trois trous traversants 7 sont ménagés dans le disque annulaire 4 et sont circonférentiellement régulièrement répartis tout en étant alternés avec les oreilles 3. La carte électronique 1 comprend également un connecteur 8 en saillie radialement vers l'extérieur au droit d'une oreille 3. En vue d'une fixation particulièrement robuste, le connecteur 8 peut être fixé par des pattes 9 en saillie dans des trous 10 du circuit imprimé 2, voir figures 2 et 3. La carte électronique 1 comprend également trois capteurs 11, chacun fixé sur une oreille 3, par exemple par montage en surface. Les capteurs 11 peuvent être du type magnétosensible, par exemple une cellule à effet Hall. Les capteurs 11, visible sur la figure 3, sont montés sur la face du circuit imprimé 2 opposée à la face supportant les composants électroniques 6.

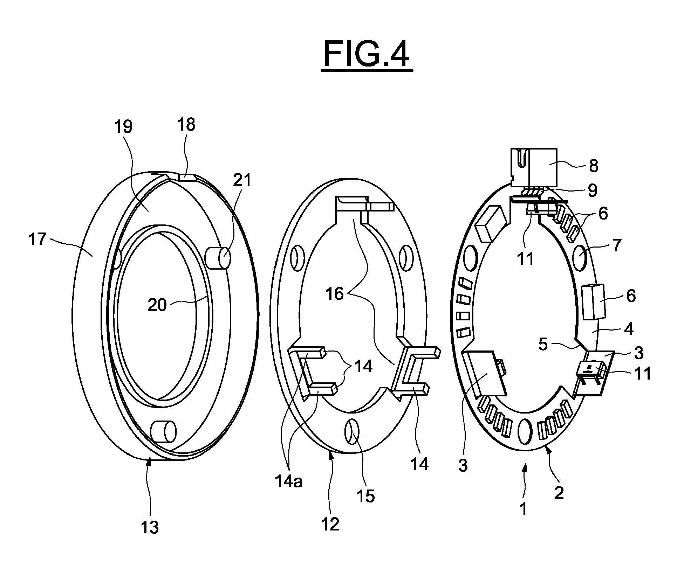

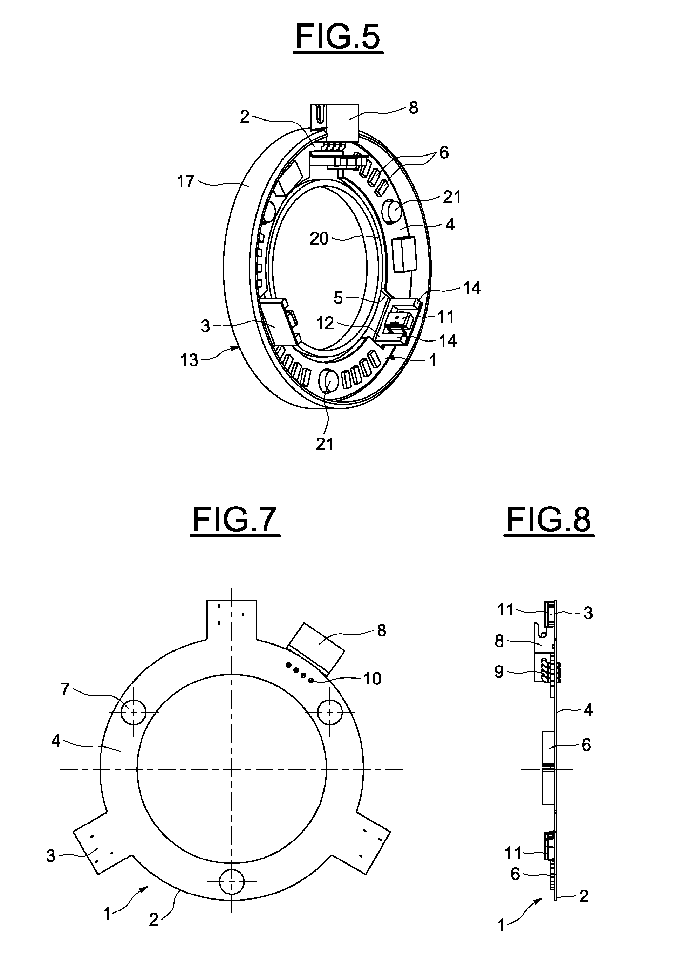

Sur les figures 1 à 3, la carte électronique 1 est présentée dans un état intermédiaire, les oreilles 3 étant dirigées radialement vers l'intérieur. Les oreilles 3 sont ensuite pliées pour présenter une forme plane axiale visible sur les figures 4 et 5. Le pliage des oreilles 3, de la position radiale d'origine à la position finale axiale peut être réalisée par une machine munie d'un outil, chauffant ou non, prévu à cet effet. Les capteurs 11 font face vers l'intérieur.

Le bloc capteur visible sur les figures 4 et 5, comprend un support intermédiaire 12 et un capot 13 pouvant coopérer avec la carte électronique 1 en vue d'une indexation angulaire de ces deux éléments. Le support intermédiaire 12 se présente sous la forme d'une pièce, par exemple réalisée en matériau synthétique tel qu'un polyamide, de forme générale annulaire correspondant à celle du disque 4. Le support intermédiaire 12 est muni de trois paires de pattes 14 s'étendant axialement. Les pattes 14 d'une paire de pattes sont situées l'une par rapport à l'autre à une distance supérieure à la largeur du capteur 11 et de ses broches de fixation. La longueur axiale des pattes 14 est sensiblement égale à celle des oreilles 3.

Dans le support intermédiaire 12 sont ménagés trois trous traversants 15 circonférentiellement régulièrement répartis et alternés avec les paires de pattes 14 avec une position et un diamètre correspondant aux trous 7 de la carte électronique 1. Des encoches 16 sont également ménagées dans le support intermédiaire 12 radialement à l'intérieur des pattes 14. Les encoches 16 correspondent aux encoches délimitées par les découpes 5 après le pliage des oreilles 3.

Lors de l'assemblage de la carte électronique 1 et du support intermédiaire 12, la face de la carte électronique visible sur la figure 3, opposée à celle supportant les composants électroniques 6, vient en contact avec une face radiale du support intermédiaire 12. Chaque paire de pattes 14 passe de part et d'autre d'un capteur 11 et vient former une surface de référence rigide 14a plane pour les oreilles 3 supportant les capteurs 11. Les pattes 14 confèrent ainsi une rigidité satisfaisante aux oreilles 3.

Le capot 13 comprend une paroi axiale extérieure 17 munie d'une encoche 18 pour le passage du connecteur 8, une paroi radiale 19 s'étendant vers l'intérieur à partir d'une extrémité de la paroi axiale 17 à l'opposé de l'encoche 18, et une paroi axiale 20 de petit diamètre s'étendant à partir de l'intérieur de la paroi radiale 19 dans la même direction que la paroi axiale 17. Le capot 13 comprend en outre trois pions axiaux 21 supportés par la paroi radiale 19 du côté des parois axiales 17 et 20, et circonférentiellement régulièrement répartis.

Lors du montage, le support intermédiaire 12 et la carte électronique 1 viennent se loger dans le capot 13 avec les pions 21 passant par les trous 15 du support 12 et par les trous 7 de la carte électronique 1. Le connecteur 8 est en saillie radiale vers l'extérieur par l'encoche 18. Les parois axiales 17 et 20 du capot 13 présentent une longueur axiale supérieure à l'épaisseur du corps annulaire du support 12 et du disque annulaire 4 de la carte électronique 1. Les pattes 14 du support 12, les oreilles 3 et les capteurs 11 sont en saillie axiale par rapport à la paroi axiale intérieure 20.

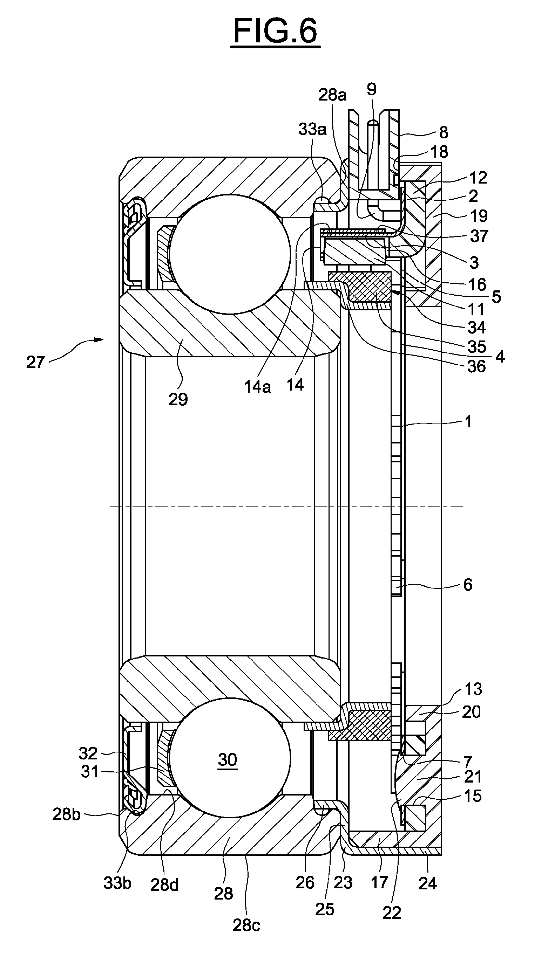

La carte électronique 1 et le bloc capteur formés par le support 12 et le capot 13 peuvent ensuite être solidarisés de façon particulièrement robuste en déformant les pions 21 à la manière de rivets, par exemple par déformation à chaud. On provoque ainsi un élargissement de l'extrémité des pions 21 pour former une tête de rivet 22, voir figure 6.

Le bloc capteur et la carte électronique 1 peuvent ensuite être montés dans une coupelle 23 de forme générale annulaire comprenant une paroi axiale 24 de grand diamètre munie d'un alésage dans lequel est emmanchée la surface extérieure de la paroi axiale 17 de grand diamètre du capot 13, une paroi radiale 25 s'étendant vers l'intérieur à partir de la paroi axiale 24 et un rebord axial 26 s'étendant à l'opposé de la paroi axiale 24 à partir de l'extrémité de petit diamètre de la paroi radiale 25, voir figure 6. La coupelle 23 peut être munie d'une encoche pour laisser dépasser le connecteur 8.

L'ensemble ainsi formé peut être monté sur un palier à roulement 27. Le palier à roulement 27 comprend une bague extérieure 28, une bague intérieure 29, une rangée d'éléments roulants 30 disposés entre les bagues extérieure 28 et intérieure 29, une cage 31 de maintien de l'espacement circonférentiel régulier des éléments roulants 30 et un flasque d'étanchéité 32 fixé à la bague extérieure 28 et formant un passage étroit avec la bague intérieure 29. La bague extérieure 28 peut être symétrique par rapport à un plan radial et présenter une surface radiale frontale 28a du côté du bloc capteur, une surface radiale frontale 28b du côté du flasque d'étanchéité 32, une surface extérieure 28c et un alésage 28d à partir duquel est ménagé un chemin de roulement sur les éléments roulants 30. La bague extérieure 33 comporte deux rainures 33a et 33b ménagées à partir de l'alésage 28d et à proximité des surfaces frontales 28a et 28b. L'une 33b des deux rainures est utilisée pour la fixation du flasque 32. Le rebord axial 26 de la coupelle 23 est emmanché dans le rebord de la rainure 33b, la portion radiale 25 venant en contact avec la surface frontale 28a de la bague extérieure 28.

La bague intérieure 29 supporte un codeur 34 comprenant une partie active 35 et un support 36 emmanché sur une surface extérieure de la bague intérieure 29. Le support 36 peut se présenter sous la forme d'une coupelle annulaire en tôle. La partie active 35 peut être surmoulée sur l'extérieur du support 36 et présenter une surface extérieure axiale venant en regard des capteurs 11 avec un entrefer radial.

En outre, pour accroître la rigidité des oreilles 3, on peut prévoir une surépaisseur 37 venant augmenter l'épaisseur du circuit imprimé 2 au niveau des oreilles 3 et rigidifier localement le circuit imprimé afin de lui conférer au niveau des oreilles une forme plane qu'il tendra à conserver. La couche de rigidification peut être constituée par exemple d'une couche de résine époxy chargée de fibres de verre appliquée localement sur le substrat souple. La surépaisseur 37 est disposée du côté des oreilles 3 opposé aux capteurs 11.

On forme ainsi un palier à roulement instrumenté à entrefer radial et avec un faible encombrement axial en raison du capteur 11 en partie en saillie dans l'espace entre les bagues extérieure 28 et intérieure 29 et grâce au fait que les composants électroniques 6 sont logés dans le bloc capteur dans l'encombrement axial des capteurs 11. De la même façon que les autres composants électroniques, les capteurs peuvent être fixés sur le circuit imprimé 2 par soudure, préalablement au pliage des oreilles, ledit circuit étant alors plat. Le procédé de mise en place des capteurs et autres composants électroniques pourra facilement être automatisé à l'aide d'un robot en utilisant la technique du « Pick-and-place ».

Dans la position illustrée sur la figure 6, les capteurs 11 sont directement en regard du codeur 34. On peut ainsi éviter de noyer les capteurs 11 dans une résine ou un matériau synthétique, d'où un gain de temps et de main d'oeuvre et un meilleur signal fourni par les capteurs 11.

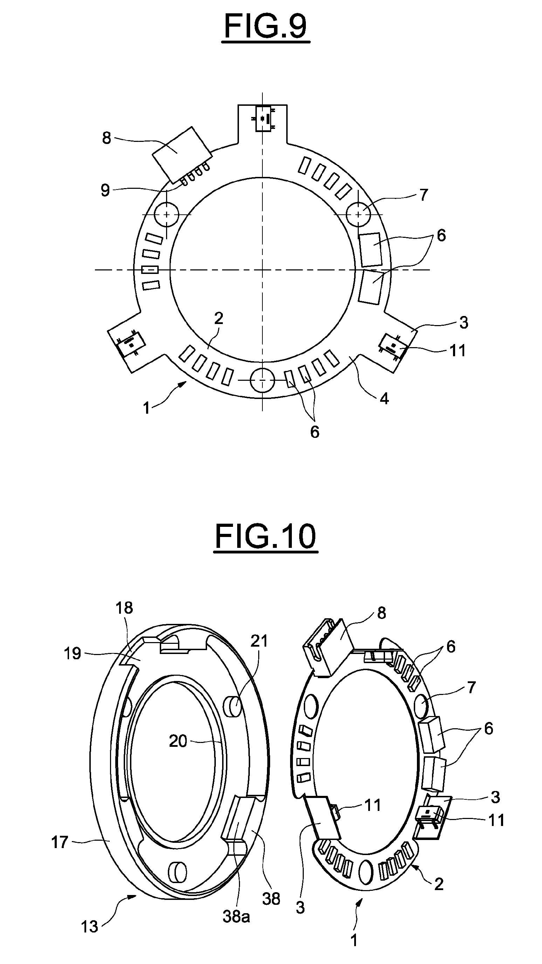

Dans le mode de réalisation illustré sur les figures 7 à 11, la carte électronique 1 est similaire à celle du mode de réalisation précédent à ceci près que les oreilles 3 sont en saillie radialement vers l'extérieur à partir du disque annulaire 4 avant pliage. La présence d'encoches n'est pas nécessaire. Les capteurs 11 et les composants électroniques 6 peuvent être fixés sur la même face du circuit imprimé 2, voir figure 9. I1 en va de même du connecteur 8.

A partir de l'état intermédiaire illustré sur les figures 7 à 9, les oreilles 3 sont pliées à 90° et deviennent ainsi parallèles à l'axe du disque annulaire 4. Le pliage est effectué vers le côté supportant les composants électroniques 6. Après pliage, les oreilles présentent une forme plane.

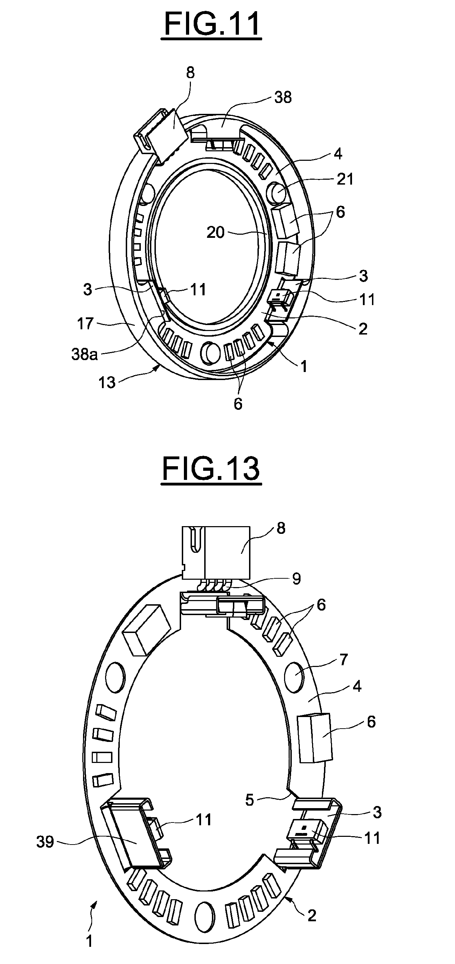

La carte électronique 1 peut alors être montée dans le capot 13 visible sur les figures 10 et 11. La présence d'un support intermédiaire n'est pas indispensable. Le capot 13 se rapproche de celui illustré précédemment à ceci près que l'alésage de la paroi axiale extérieure 17 est munie de trois protubérances 38 dirigées radialement vers l'intérieur et circonférentiellement régulièrement espacées tout en étant alternées avec les pions 21. Chaque protubérance 38 présente une épaisseur radiale généralement inférieure à la moitié de la dimension radiale de la paroi radiale 19 du capot 13 et s'étend axialement sur tout ou partie de la longueur axiale de la paroi axiale 17. Chaque protubérance 38 présente une surface de référence 38a parallèle à l'axe du capot 13 et de la carte électronique 1. Les surfaces de référence 38a peuvent être normales à une droite radiale.

Comme on le voit sur la figure 10, la carte électronique 1 peut être amenée par un mouvement axial simple dans le capot 13. Le connecteur passe dans l'encoche 18. Chaque oreille 3 est en appui contre une surface de référence 38a plane. Les pions 21 passent dans les trous 7 pour aboutir à l'état illustré sur la figure 11. Les pions 21 peuvent ensuite être déformés pour la fixation définitive de la carte électronique dans le capot 13. Les oreilles 3 peuvent être maintenues contre les surfaces de référence 38a par collage, par exemple en disposant un point de colle sur chaque surface de référence 38a juste avant l'insertion de la carte électronique 1 dans le capot 13.

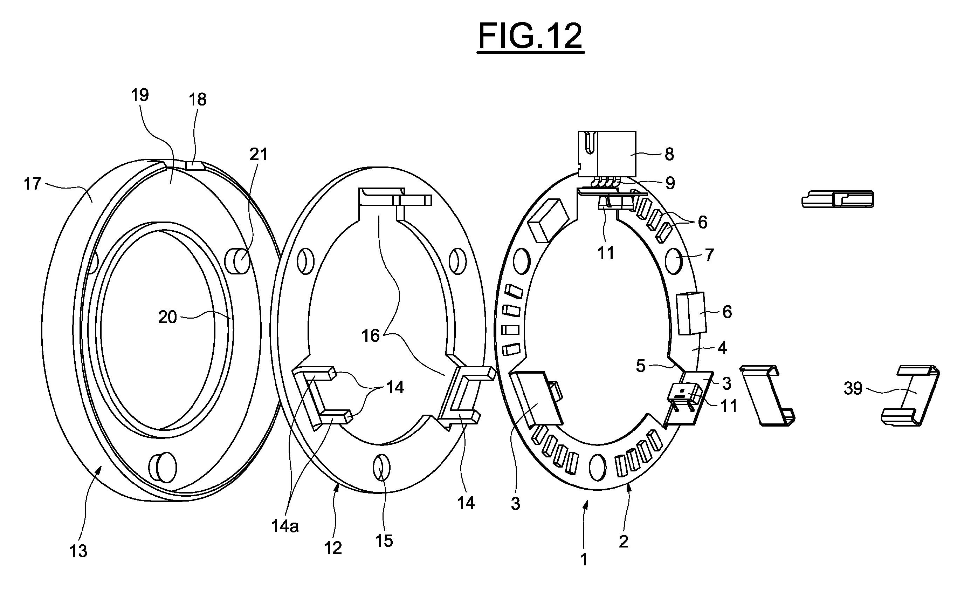

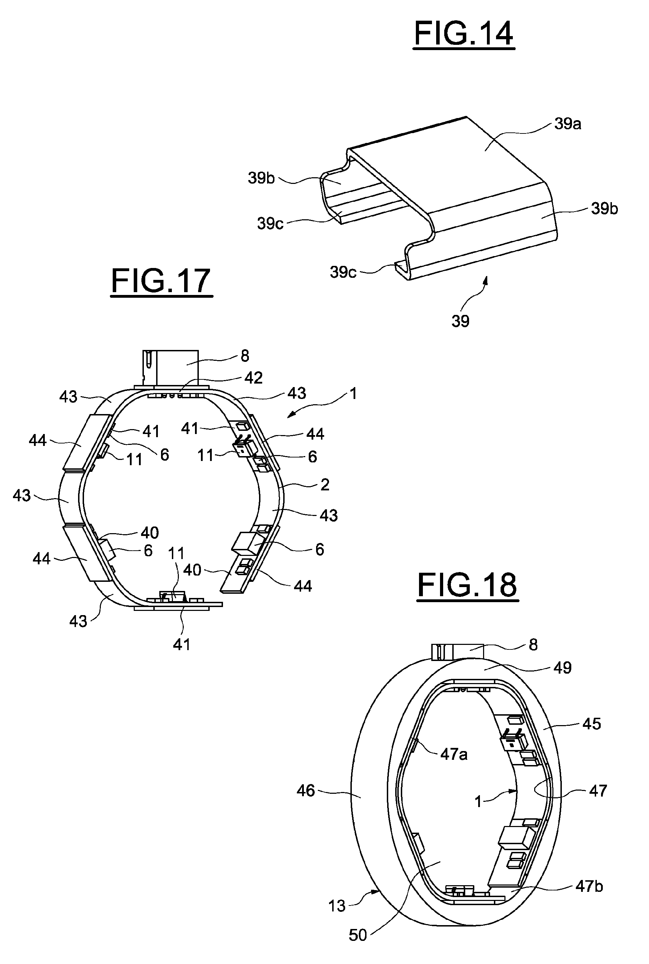

Dans le mode de réalisation illustré sur les figures 12 à 14, la carte électronique 1, le support intermédiaire 12 et le capot 13 sont identiques à ceux du premier mode de réalisation des figures 1 à 6. En outre, la fixation des oreilles 3 plane sur les pattes 14 du support intermédiaire 12 est assurée par des agrafes 39, voir figure 14. Une agrafe 39 est prévue pour venir serrer légèrement une oreille 3 contre les surfaces de référence 14a planes d'une paire de pattes 14. Les agrafes 39 peuvent être réalisées par pliage d'un flanc de tôle. Une agrafe 39 est symétrique par rapport à un plan central.

Une agrafe 39 comprend un corps rectangulaire 39a à partir d'extrémités opposées duquel s'étendent deux ailes symétriques 39b perpendiculaire au corps 39a. A partir des extrémités des ailes 39b opposées au corps 39a, s'étendent deux rebords 39c parallèles au corps 39a et tournés vers l'intérieur. Les agrafes 39 peuvent être prédisposées sur la carte électronique 1 après pliage des oreilles 3 comme illustré sur la figure 13 ou encore être montées après l'assemblage de la carte électronique 1, du support intermédiaire 12 et du capot 13. Le corps 39a est en contact avec la face de l'oreille 3 opposée au capteur 11. Les ailes 39b viennent entourer les extrémités des oreilles 3 et un bord des pattes 14. Les rebords 39c se faisant face l'un à l'autre sont en appui sur une face axiale des pattes 14 à l'opposé des surfaces de référence 14a. Une agrafe 39 assure un léger pincement de l'oreille 3 du circuit imprimé 2 contre la surface de référence 14a des pattes 14, une oreille 3 et une patte 14 étant enserrées entre un rebord 39c et le corps 39a.

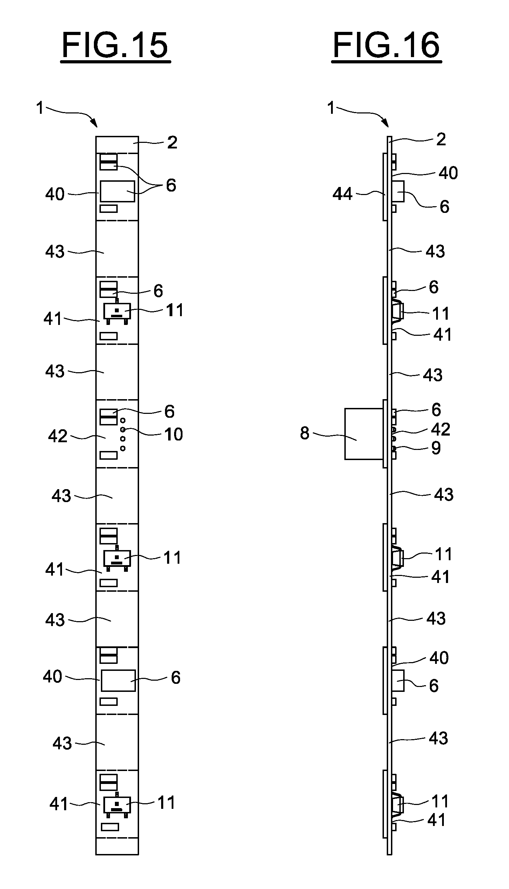

Dans le mode de réalisation illustré sur les figures 15 à 19, le circuit imprimé 2 se présente sous la forme d'une bande rectangulaire allongée plate à l'état intermédiaire illustrée plus particulièrement sur les figures 15 et 16. Le circuit imprimé 2 comprend des sections 40 planes supportant les composants électroniques 6, des sections 41 planes supportant chacune un capteur 11 et éventuellement des composants électroniques 6, une section 42 plane supportant le connecteur 8 et le cas échéant des composants électroniques 6 et des sections 43 dépourvues de composants électroniques et de capteurs. Les sections 43 peuvent bien entendu être munies de lignes conductrices imprimées reliant les autres sections. Les sections sont alternées en ce sens qu'une section 40, 41 ou 42 est disposée entre deux sections 43. Les sections 40, 41 et 42 sont renforcées par une surépaisseur 44 analogue au renfort 37 illustré sur la figure 6.

Les capteurs 11 et les composants électroniques 6 sont disposés sur une face du circuit imprimé 2. Le connecteur 8 et les renforts 44 sont disposés sur la face opposée.

La carte électronique 1 est ensuite mise en forme pour lui conférer l'aspect illustré sur la figure 17. Les sections 43 dépourvues de composants et de capteurs font l'objet d'un pliage avec une courbure relativement faible et les sections 40 à 42 restent droites, notamment grâce au renfort 44. On obtient donc une forme générale d'hexagone ouvert avec les capteurs 11 circonférentiellement régulièrement répartis sensiblement à 120 degrés. Le circuit électronique 1 comprend cinq sections coudées 43 séparant six sections droites, trois sections 41 supportant un capteur 11, deux sections 40 portant des composants électroniques 6 et une section 42 supportant le connecteur 8.

Le circuit électronique 1 est ensuite disposé dans un capot 13 de type illustré sur la figure 18, se présentant sous la forme d'un boîtier comportant un anneau 45 pourvu d'une surface extérieure circulaire 46 et d'une surface intérieure 47 en concordance de forme avec celle de la carte électronique 1 dans son état illustré sur la figure 17, en d'autres termes, en forme d'hexagone à coins arrondis, de telle sorte que les renforts 44 disposés sur l'extérieur des sections 40, 41 et 42, soient en contact avec la surface intérieure 47 assurant ainsi un excellent positionnement des capteurs 11 dans le capot 13. La surface intérieure 47 comprend des portions droites 47a en contact avec les renforts 44 et des portions arrondies 47b qui peuvent rester à une faible distance des sections coudées 43. Les renforts 44 peuvent être fixés par collage sur les portions 47a qui forment les surfaces de référence. L'anneau 46 comprend deux surfaces frontales radiales dont la surface 49 est visible sur la figure 18. Une échancrure peut être ménagée pour laisser dépasser le connecteur 8 radialement vers l'extérieur de l'anneau 46.

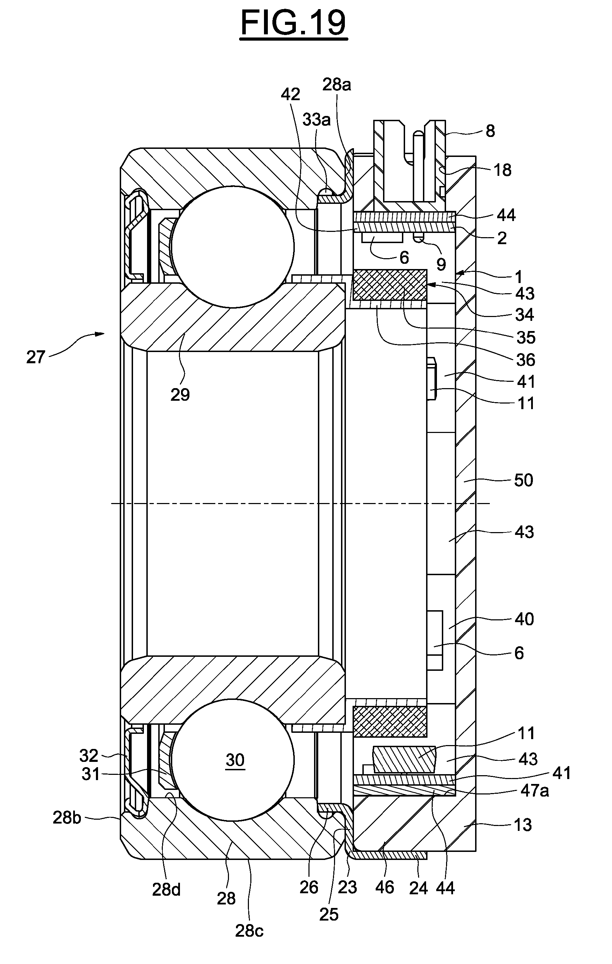

Comme illustré sur la figure 19, le capot 13 comprend également une paroi radiale 50 obturant une extrémité axiale de l'anneau 45 et disposée du côté opposé à la coupelle 23 fixée dans la rainure 33a du palier à roulement 27. Les capteurs 11 se trouvent disposés sur la face intérieure de la carte électronique 1, à l'extérieur de la partie active 35 du codeur 34 avec un entrefer radial comme dans les modes de réalisation précédents. Les capteurs 11 sont supportés par des sections droites 41 de la carte électronique 1 munies de renforts 44 en contact avec la surface droite 47a formée dans la surface intérieure de l'anneau 47 du capot 13, formant ainsi des surfaces de référence. Le renfort 44 peut être collé aux surfaces de référence 47a planes en vue de stabiliser le positionnement des capteurs 11.

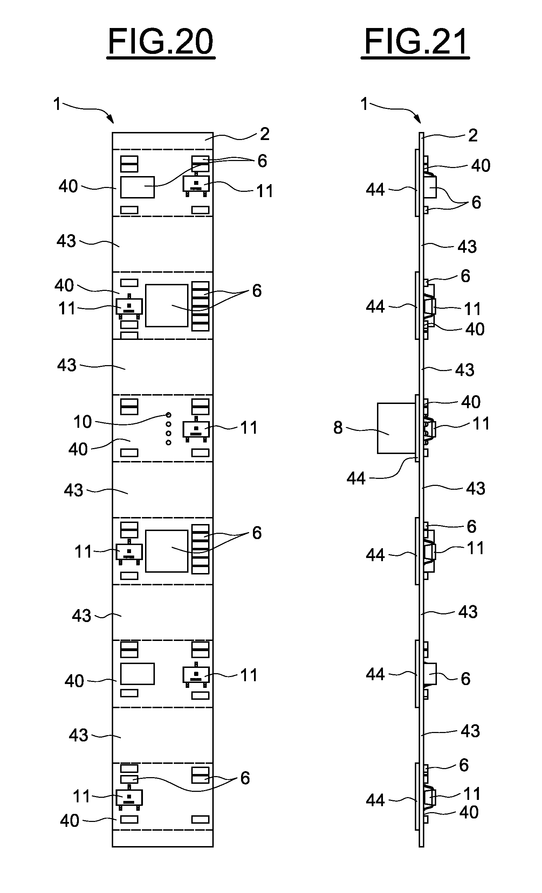

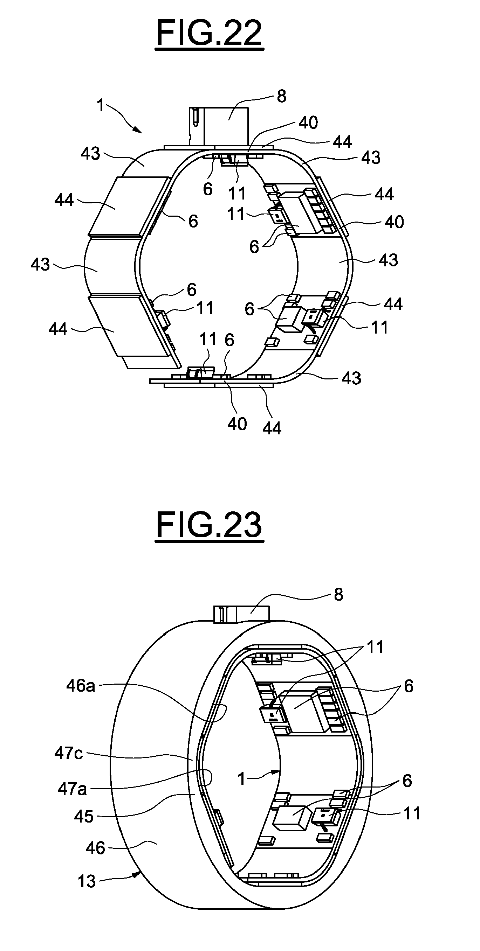

Dans le mode de réalisation illustré sur les figures 20 à 24, le circuit électronique 1 présente une forme générale proche de celle de réalisations précédentes, avec une largeur nettement accrue, par exemple doublée, comme on peut le voir sur la figure 20 en comparaison de la figure 15. Le circuit imprimé 2 comprend cinq sections 43 dépourvues de composants et six sections 40 planes supportant chacune un capteur 11 et des composants électroniques 6. L'une des sections 40 supporte également le connecteur 8. Les capteurs 11 sont disposés selon deux rangées de trois capteurs 11 de façon alternée, chaque portion 40 supportant un capteur 11. Après mise en forme de la carte électronique 1, voir figure 22, les capteurs 11 se trouvent répartis en deux groupes de trois, chaque groupe étant disposé dans un même plan radial, les deux plans radiaux étant décalés axialement l'un par rapport à l'autre. La carte électronique 1 une fois mise en forme, est disposée dans le capot 13 présentant une forme annulaire semblable à celle de la figure 18 mais avec une largeur axiale plus importante adaptée à la largeur axiale accrue de la carte électronique de ce mode de réalisation.

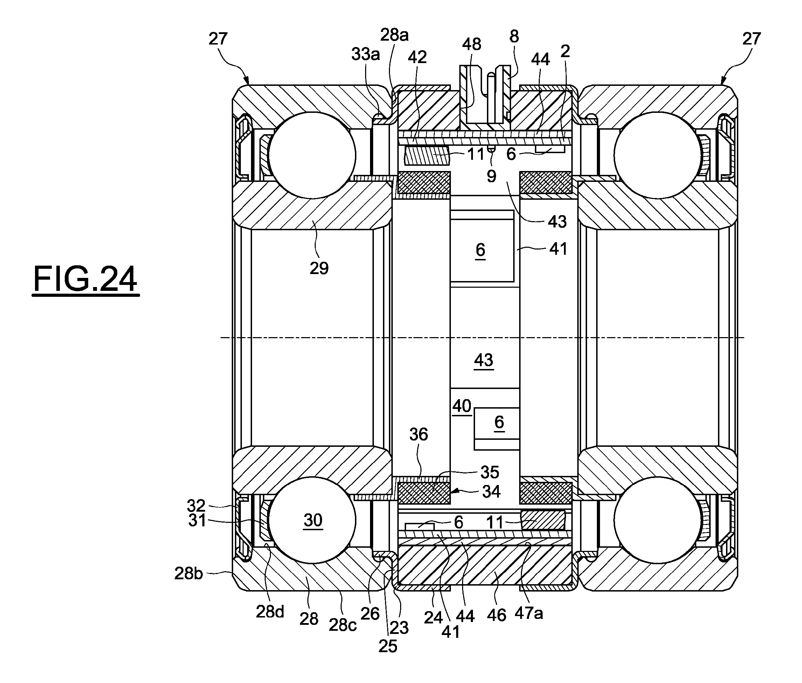

Comme cela est visible sur la figure 24, le capot 13, dépourvu de paroi radiale, comprend une fenêtre 48 laissant dépasser le connecteur 8 en saillie vers l'extérieur. Le capot 13 est prévu pour coopérer avec deux coupelles 23, chacune disposée à une extrémité axiale du capot 13. Chaque coupelle axiale 23 est fixée à un palier à roulement 27. Ainsi, le palier à roulement 27 dont les bagues extérieures 28 sont solidaires en rotation peut être instrumenté, chaque bague intérieure 29 étant munie d'un codeur 34, chaque codeur 34 fournissant un signal magnétique à un groupe de capteurs 11 dédiés audit codeur 34. Dans le mode de réalisation représenté, chaque groupe de codeurs 11 comprend trois codeurs 11. On obtient ainsi un ensemble de deux paliers à roulement instrumenté de faible encombrement axial et radial et pouvant être fabriqué à coût raisonnable.

Grâce à l'invention, on peut ainsi aisément mettre en place de façon automatisée et économique l'ensemble des composants électroniques et des capteurs sur un circuit imprimé, la carte électronique ainsi formée étant ensuite mise en place dans un bloc capteur.

## Revendications

1. Dispositif de palier à roulement (27) instrumenté pour mesurer les paramètres de rotation du palier, comprenant une bague tournante (29), une bague non tournante (28), au moins une rangée d'éléments roulants (30) disposés entre les bagues non tournante et tournante, un codeur (34) tournant et une carte électronique (1) non tournante supportant au moins un capteur (11), **caractérisé par le fait que** la carte (1) est pliable et comprend au moins une zone pliée (3) plane supportant ledit capteur (11) et venant en appui sur une surface de référence rigide (14a) faisant partie d'un bloc capteur, au moins un capteur (11) se présentant sous la forme d'une cellule de détection ponctuelle.

2. Dispositif selon la revendication 1, dans lequel la carte électronique (1) comporte également des composants électroniques (6) de traitement du signal émis par le ou les capteurs (11), les composants électroniques (6) et le ou les capteurs (11) étant disposés sur une même face de la carte électronique (1).

3. Dispositif selon la revendication 1, dans lequel la carte électronique (1) comporte également des composants électroniques (6) de traitement du signal émis par le ou les capteurs (11), les composants électroniques (6) d'une part, et le ou les capteurs (11) d'autre part, étant disposés sur des faces opposées dans la carte électronique (1).

4. Dispositif selon l'une quelconque des revendications précédentes, dans lequel la carte électronique (1) comprend également un connecteur (8) disposé sur une même face que le ou les capteurs (11) ou sur la face opposée.

5. Dispositif selon l'une quelconque des revendications précédentes, dans lequel la zone (3) supportant le capteur (11) est fixée à la surface de référence (14a) par collage.

6. Dispositif selon l'une quelconque des revendications 1 à 4, dans lequel la zone pliable (3) supportant le capteur (11) est fixée à la surface de référence (14a) par retenue mécanique.

7. Dispositif selon la revendication 6, dans lequel la zone pliable (3) supportant le capteur (11) est fixée à la surface de référence (14a) par une agrafe (39).

8. Dispositif selon l'une quelconque des revendications précédentes, comprenant un bloc capteur fixé à la bague non tournante (28) et supportant la carte électronique (1).

9. Dispositif selon la revendication 8, dans laquelle le bloc capteur comprend un capot (13) et un support intermédiaire (12) muni d'au moins une surface de référence (14a) pour le ou les capteurs, le capot (13) étant muni d'au moins un élément (21) de positionnement et de retenue du support intermédiaire et de la carte électronique.

10. Dispositif selon la revendication 8, dans lequel le bloc capteur est muni d'au moins une surface de référence (38a) pour le ou les capteurs et d'au moins un élément (21) de positionnement et de retenue de la carte électronique.

11. Dispositif selon l'une quelconque des revendications précédentes, dans lequel la carte électronique (1) se présente dans le bloc capteur sous la forme d'un anneau radial muni d'au moins une patte axiale formant une zone de support du capteur.

12. Dispositif selon l'une quelconque des revendications 1 à 10, dans lequel la carte électronique (1) se présente dans le bloc capteur sous la forme d'un anneau axial ouvert ou à extrémités jointives.

13. Dispositif selon la revendication 12, dans lequel la carte électronique (1) comprend des portions coudées (43) et des portions droites (48), les portions droites étant munies de renforts (44).

14. Dispositif selon la revendication 12 ou 13, comprenant au moins deux rangées de capteurs (11) disposées dans des plans radiaux distincts.

15. Procédé de fabrication d'un dispositif de palier à roulement (27) instrumenté pour mesurer les paramètres de rotation, comprenant une bague tournante (29), une bague non tournante (28), une rangée d'éléments roulants (30) disposés entre les bagues tournante et non tournante, un codeur tournant (34) et une carte électronique (1) comprenant au moins un capteur (11), dans lequel on fixe ledit au moins un capteur (11) sur la carte électronique (1), on met en forme par pliage la carte électronique (1), et on monte ladite carte électronique (1) dans un bloc capteur, une zone pliée (3) plane de la carte électronique supportant un capteur venant en appui sur une surface de référence rigide (14a) dudit bloc capteur.

16. Procédé selon la revendication 15, dans lequel la carte électronique (1) est fixée au bloc capteur par repoussage de matière d'une partie du bloc capteur.

17. Procédé selon l'une quelconque des revendications 15 à 16, dans lequel ledit au moins un capteur (11) est fixé sur une seule face de la carte électronique.

18. Procédé selon l'une quelconque des revendications 15 à 17, dans lequel la zone (3) de la carte électronique (1) supportant le capteur est collée à la surface de référence (14a).

19. Procédé selon l'une quelconque des revendications 15 à 17, dans lequel la zone (3) de la carte électronique (1) supportant le capteur est agrafée à la surface de référence (14a).
